# EUROPÄISCHE PATENTSCHRIFT

(11) **EP 0 415 144 B1**
(45) Veröffentlichungstag und Bekanntmachung des Hinweises auf die Patenterteilung: **17.01.1996**
(21) Anmeldenummer: 90115297.5
(22) Anmeldetag: 09.08.1990
(51) Int. Cl.: C08J 3/20, C08L 77/00, C08L 67/00, C08L 69/00, C08L 71/12, C08K 7/02

(54) **Verfahren zur Herstellung von verstärkten, zähmodifizierten thermoplastischen Formmassen**
Process for preparing reinforced and impact resistance modified thermoplastic moulding compounds
Procédé pour préparer des compositions de moulage renforcées et modifiées à résistance au choc

(30) Priorität: 16.08.1989 DE 3926904
(43) Veröffentlichungstag der Anmeldung: 06.03.1991
(73) Patentinhaber: BASF Aktiengesellschaft, D-67063 Ludwigshafen (DE)
(72) Erfinder: Goetz, Walter, Dr., D-6700 Ludwigshafen (DE); Blinne, Gerd, Dr., D-6719 Bobenheim (DE); Gutsche, Herbert, D-6711 Beindersheim (DE); Steinberger, Rolf, Dr., D-6707 Schifferstadt (DE)

(56) Entgegenhaltungen:
- EP-A- 0 136 540
- EP-A- 0 327 983

## Beschreibung

Gegenstand der Erfindung ist ein Verfahren zur Herstellung von mit Fasern verstärkten, zähmodifizierten thermoplastischen Formmassen, wobei man in die Schmelze der thermoplastischen Kunststoffe (A) zunächst die Fasern (B) und danach den Kautschuk (C) einbringt und die Umsetzung einstufig bei einer Temperatur im Bereich von zweckmäßigerweise 250 bis 300°C durchführt.

Polyamide sind thermoplastische Kunststoffe, die aufgrund ihrer guten Eigenschaften in vielen Bereichen als Konstruktionswerkstoffe Eingang gefunden haben.

Auch die Schlagzähmodifizierung und die Modifizierung mit Füllstoffen dieser thermoplastischen Kunststoffe ist an sich bekannt und in der Literatur beschrieben.

Nur beispielsweise sei hier auf die DE-A-26 22 973 (US 4 174 358) verwiesen, in der die Schlagzähmodifizierung von Polyamiden mit säuregruppenhaltigen Olefinpolymerisaten beschrieben wird. Die Massen können gemäß der Beschreibung auch Füllstoffe enthalten.

Nach Angaben der DE-A-38 04 161 besitzen füllstoffhaltige thermoplastische Formmassen auf der Grundlage mindestens eines thermoplastischen Kunststoffs aus der Gruppe der Polyamide, Polyester und Polyphenylenether, mindestens eines faser- oder teilchenförmigen Füllstoffs und einer schlagzäh modifizierenden Kautschukmischung, die besteht aus Kautschuken, die sich von säurefunktionellen oder latent säurefunktionellen Monomeren ableiten und aus Kautschuken, die frei von Gruppen derartiger Monomeren sind, neben guten mechanischen Eigenschaften ein verbessertes Gleitreibungsverhalten und einen verringerten Abrieb. Zur Herstellung der Formmassen wird in der Patentbeschreibung lediglich vermerkt, das die Aufbaukomponenten gemischt, bei 280°c auf einem Extruder aufgeschmolzen, extrudiert und granuliert werden.

Aus der EP-B-0 136 540 (US 4 574 131) bekannt ist ferner ein Zweistufenverfahren zur Herstellung von schlagzähmodifizierten Polyamidformmassen, wobei man in der 1. Stufe die mit einem Organosilan und einem Polyurethan-Ionomeren beschichteten silikatischen Füllstoffe zunächst mit dem Polyamid oberhalb dessen Schmelzpunkt mischt und in der 2. Stufe die thermoplastischen Elastomeren in dem Füllstoff enthaltenden Polyamid oberhalb dessen Schmelzpunkt fein verteilt. Nach Angaben der Beispiele, die als bevorzugt angewandte Verfahrensvarianten anzusehen sind, werden die beschichteten Glasfasern in einem Zweischneckenkneter in geschmolzenes Polycaprolactam eingearbeitet, die Schmelze danach ausgetragen, in Stränge gegossen, gekühlt und granuliert. Das erhaltene füllstoffhaltige Granulat wird anschließend mit dem Elastomeren bei Raumtemperatur vermischt, die Mischung erneut im Extruder aufgeschmolzen, homogenisiert, die Schmelze in Stränge gegossen, gekühlt, granuliert und aus dem erhaltenen Granulat Prüfkörper gespritzt. Nach dieser Technik werden Formmassen mit guter Zähigkeit erhalten. Nachteilig an der beschriebenen Verfahrensweise, die außerdem mit einem großen Energieaufwand verbunden ist, ist jedoch, daß durch das mehrmalige Aufschmelzen des faserhaltigen Polyamidbatches eine thermische Schädigung des Thermoplasten eintritt. Nachteilig ist ferner, daß die Fasern beim Wiederaufschmelzen stark verkürzt werden und sich dadurch die Steifigkeit und Festigkeit der Formmassen beträchtlich verringert.

Die Aufgabe der vorliegenden Erfindung bestand darin, die obengenannten Nachteile möglichst vollständig oder zumindest teilweise zu vermeiden und faserhaltige, zähmodifizierte thermoplastische Formmassen mit einer höheren Zugfestigkeit herzustellen.

Diese Aufgabe konnte überraschenderweise gelöst werden durch ein Verfahren zur Herstellung von verstärkten, zähmodifizierten, thermoplastischen Formmassen, die bestehen aus, bezogen auf 100 Gew.-Teile,
A) 30 bis 93 Gew.-Teilen, vorzugsweise 60 bis 84 Gew.-Teilen, mindestens eines thermoplastischen Polyamids
B) 5 bis 50 Gew.-Teilen, vorzugsweise 10 bis 35 Gew.-Teilen Fasern, vorzugsweise Glasfasern und
C) 2 bis 20 Gew.-Teilen, vorzugsweise 6 bis 15 Gew.-Teilen mindestens eines schlagzähmodifizierenden Kautschuks, welcher 0,5 bis 60 Gew.-% an Gruppen enthält, die sich von säurefunktionellen oder latent säurefunktionellen Gruppen ableiten, und
bis zu 20 Gew.-% üblicher Zusatzstoffe und Verarbeitungsmittel (bezogen auf das Gesamtgewicht der Komponenten (A) bis (C),
   wobei man
in die Schmelze den thermoplastischen Polyamids (A) zunächst die Fasern (B) einbringt,
die Komponenten (A) und (B) vermischt, danach der erhaltenen Mischung in der Schmelze den Kautschuk (C) einverleibt und
die erhaltene Formmasse extrudiert und granuliert
und das dadurch gekennzeichnet ist, daß man die Reaktion einstufig durchführt, wobei die Schmelze aus (A) und (B) vor der Zugabe von (C) nicht erstarrt oder sich anderweitig verfestigt.

Gegenstände der Erfindung sind ferner spezielle Ausgestaltungen des erfindungsgemäßen Verfahrens gemäß den Ansprüchen 2 bis 5.

Nach der bevorzugt angewandten Verfahrensvariante wird die Reaktion einstufig bei einer Temperatur im Bereich von 250 bis 300°C, insbesondere von 280 bis 290°C durchgeführt. Nach einer anderen besonders bevorzugten Verfahrensweise werden im vorgenannten Temperaturbereich in die Schmelze der thermoplastischen Polyamide (A) zunächst die Fasern (B) und danach die Kautschuke (C) eingebracht und die Reaktion wird bei einer konstanten oder im wesentlichen konstanten Temperatur durchgeführt, die in Abhängigkeit vom eingesetzten thermoplastischen Kunststoff oder der angewandten Kunststoffmischung unterschiedlich hoch sein kann, wobei jedoch erfindungswesentlich ist, daß die faserhaltige Schmelze der thermoplastischen Polyamids vor Zugabe des Kautschuk zu keinem Zeitpunkt der Reaktion erstarrt oder sich anderweitig verfestigt.

Zu den zur Herstellung der Formmassen nach dem erfindungsgemäßen Verfahren geeigneten Aufbaukomponenten ist im einzelnen folgendes auszuführen:

Als Komponente (A) enthalten die Formmassen, bezogen auf 100 Gew.-Teile, bevorzugt mindestens ein Polyamid (A) in einer Menge von 30 bis 93 Gew.-Teilen, vorzugsweise 20 bis 80 Gew.-Teilen und insbesondere 25 bis 70 Gew.-Teilen.

Halbkristalline oder amorphe Polyamide mit einem Molekulargewicht (Gewichtsmittelwert) von mindestens 5.000, wie sie z.B. in den amertikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden. Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Dicarbonsäuren genannt.

Als Diamine eignen sich besonders Alkandiamine mit 6 bis 12, insbesondere 6 bis 8 Kohlenstoffatomen sowie m-Xylylendiamin, Di-(4-aminophenyl)-methan, Di-(4-aminocyclohexyl)-methan, 2,2-Di-(4-aminophenyl)-propan oder 2,2-Di-(4-aminocyclohexyl)-propan.

Weiterhin sind Polyamide, die durch Copolykondensation zweier oder mehrerer der vorgenannten Monomeren erhältlich sind, oder Mischungen mehrerer Polyamide geeignet.

Beispielhaft erwähnt seien ebenfalls teilaromatische Copolyamide, insbesondere solche, deren Einheiten sich von Terephthalsäure und Hexamethylendiamin und Adipinsäure und Hexamethylendiamin oder Terephthalsäure, Hexamethylendiamin und ε-Caprolactam ableiten. Insbesondere sind hierbei Copolyamide zu nennen, deren Triamingehalt (Gehalt an Bis-hexamethylentriamin) unter 0,5 Gew.% liegt. Entsprechende Produkte sind in Anlehnung an das in den europäischen Offenlegungsschriften 129 195 und 129 196 beschriebene Verfahren erhältlich.

Abschließend seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

(B) Als Komponente (B) enthalten die erfindungsgemäßen thermoplastischen Formmassen, bezogen auf 100 Gew.-Teile, 5 bis 50, vorzugsweise 10 bis 35 Gew.-Teile mindestens einer Faser als Verstärkungsmittel.

Als geeignete Fasern seien beispielsweise Glasfasern, Kohlenstoff-Fasern und Aramid-Fasern genannt, wobei Glasfasern bevorzugt verwendet werden.

Bei der Verwendung von Glasfasern können diese zur besseren Verträglichkeit mit dem thermoplastischen Kunststoff (A) mit einer Schlichte und einem Haftvermittler ausgerüstet sein. Im allgemeinen haben die verwendeten Glasfasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge (arithmetischer Mittelwert) der Glasfasern im Bereich vorzugsweise von 0,1 bis 1 mm und insbesondere von 0,15 bis 0,5 mm.

(C) Als schlagzäh modifizierenden Kautschuk (C) enthalten 100 Gew.-Teile der Formmassen 2 bis 20, vorzugsweise 6 bis 15 Gew.-Teile eines Kautschuks, welcher 0,5 bis 60 Gew.%, vorzugsweise 1 bis 20 Gew.% an Gruppen enthält, die sich von säurefunktionellen oder latent säurefunktionellen Monomeren ableiten.

Prinzipiell sind als Komponente (C) alle Kautschuke geeignet, die in Abmischung mit den thermoplastischen Kunststoffen (A 1) bis (A 4) eine Verbesserung der Schlagzähigkeit mit sich bringen und mit den latent säurefunktionellen oder säurefunktionellen Monomeren gepfropft oder copolymerisiert werden können.

Als säurefunktionelle oder latent säurefunktionelle Monomere seien hier stellvertretend Acrylsäure, Methacrylsäure, tertiäre Alkylester dieser Säuren, insbesondere tert.-Butylacrylat und Dicarbonsäuren wie z.B. Maleinsäure und Fumarsäure bzw. Derivate dieser Säuren sowie deren Monoester genannt.

Als latent säurefunktionelle Monomere im Sinne der vorliegenden Erfindung sollen solche Verbindungen verstanden werden, die unter den Polymerisationsbedingungen bzw. bei der Einarbeitung der Kautschuke (C) in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere die bereits erwähnten tert.-Butylacrylat und tert.-Butylmethacrylat angeführt.

Im allgemeinen handelt es sich bei den mit säurefunktionellen oder latent säurefunktionellen, copolymerisierten oder gepfropften Kautschuken um Copolymerisate, die bevorzugt aus mindestens 2 der folgenden Monomeren als Hauptkomponenten aufgebaut sind: Ethylen, Propylen, Butadien, Isobuten, Isopren, Chloropren, Vinylacetat, Styrol, Acrylnitril und Acryl- und Methacrylsäureester mit 1 bis 18 C-Atomen in der Alkoholkomponente.

Im folgenden werden einige bevorzugte Arten solcher Elastomerer vorgestellt.

Als erste bevorzugte Gruppe sind die sogenannten Ethylen-Propylen-(EPM) bzw. Ethylen-Propylen-Dien- (EPDM) Kautschuke zu nennen, die vorzugsweise ein Verhältnis von Ethylenresten zu Propylenresten im Bereich von 40:60 bis 90:10 aufweisen.

Die Mooneyviskositäten (MLI+4/100°C) solcher unvernetzter EPM- bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder Mischungen davon genannt. Bevorzugt werden Hexadien-1,5,5-Ethyliden-norbornen und Dicyclopentadien. Der Diengehalt der EPDM-Kautschuke beträgt vorzugsweise 0,5 bis 50, insbesondere 1 bis 8 Gew.%, bezogen auf das Gesamtgewicht des Kautschuks.

EPM- bzw. EPDM-Kautschuke werden vorzugsweise mit säurefunktionellen oder latent säurefunktionellen Monomeren gepfropft. Hier seien nur Acrylsäure, Methacrylsäure und ihre Derivate sowie Maleinsäureanhydrid als geeignete Monomere für diese Pfropfung genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren, wie z.B. Maleinsäure und Fumarsäure bzw. Derivate dieser Säuren, wie z.B. Ester und Anhydride, und/oder Epoxy-Gruppen enthalten. Diese Dicarbonsäurederivate bzw. Epoxy-gruppen werden vorzugsweise durch Zugabe von Dicarbonsäure- bzw. Epoxy-gruppen enthaltenden Monomeren der allgemeinen Formeln I oder II oder III oder IV zum Monomerengemisch in den Kautschuk eingebaut

R¹C(COOR)=C(COOR³)R⁴ (I)

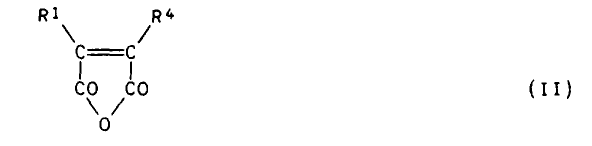

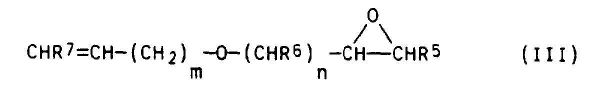

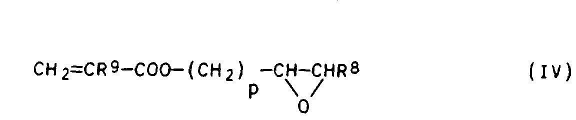

wobei R¹ - R⁹ Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Bevorzugt sind R¹ - R⁷ Wasserstoff, und m hat den Wert 0 oder 1 und n ist 1. Die entsprechenden Verbindungen sind Maleinsäure, Fumarsäure, Maleinsäureanhydrid, Alkylglycidylether oder Vinylglycidylether.

Bevorzugte Verbindungen der Formeln I, II und III sind Maleinsäure, Maleinsäureanhydrid und Epoxygruppen enthaltende Ester der Acrylsäure und/oder Methacrylsäure, wobei Glycidylacrylat und Glycidylmethacrylat besonders bevorzugt werden.

Der Ethylengehalt der Copolymeren liegt im allgemeinen im Bereich von 50 bis 98 Gew.%, der Anteil an säurefunktionellen oder latent säurefunktionellen Monomeren und der Anteil der Acrylsäure- und/oder Methacrylsäureester bzw. der Epoxygruppen enthaltenden Monomeren jeweils im Bereich von 1 bis 49 Gew.%.

Besonders bevorzugt sind Copolymerisate aus
- 50 bis 98 Gew.%,: insbesondere 60 bis 95 Gew.% Ethylen,
- 0,5 bis 40 Gew.%,: insbesondere 1 bis 20 Gew.% Acrylsäure und/oder Maleinsäureanhydrid,
- 1 bis 45 Gew.%,: insbesondere 10 bis 35 Gew.% n-Butylacrylat und/oder 2-Ethylhexylacrylat und/oder Glycidylacrylat und/oder Glycidylmethacrylat.

Weitere bevorzugte Ester der Acryl- und/oder Methacrylsäure sind die Methyl-, Ethyl-, Propyl- und i-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190°C und 2,16 kg Belastung).

Bevorzugte elastische Kautschuke (C) sind weiterhin Pfropfcopolymerisate mit Butadien, Butadien/Styrol, Butadien/Acrylnitril und Acrylestern als Pfropfgrundlage, wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk (C) können auch Pfropfpolymerisate aus
- 25 bis 98 Gew.%: eines Acrylatkautschuks mit einer Glasübergangstemperatur von unter -20°C als Pfropfgrundlage (Basispolymer)
und
- 2 bis 75 Gew.%: eines copolymerisierbaren ethylenisch ungesättigten Monomeren, dessen Homo- bzw. Copolymerisate eine übergangstemperatur von mehr als 25°C aufweisen, als Pfropfauflage (Pfropfhülle)

### eingesetzt werden.

Die Pfropfgrundlage sind Acrylat bzw. Methacrylatkautschuke, wobei bis zu 40 Gew.% weiterer Comonomerer enthalten sein können. Die C₁-C₈-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-C₁-C₆-alkylether angeführt.

Besonders bevorzugte Pfropfgrundlagen sind Emulsionspolymerisate mit einem Gelgehalt von mehr als 60 Gew.% (bestimmt in Dimethylformamid bei 25°C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis von 1:1 bis 9:1.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke (C) weisen vorzugsweise eine Glasübergangstemperatur von unter -30°C, insbesondere von unter -40°C auf.

Die Gruppen, die sich von säurefunktionellen oder latent säurefunktionellen Monomeren ableiten, werden in die vorstehend beschriebenen Pfropfcopolymerisate vorzugsweise durch Mitverwendung der entsprechenden Monomeren bei der Pfropfung eingeführt. Entsprechend dem Anteil an solchen Gruppen beträgt der Anteil der entsprechenden Monomeren in der Pfropfmonomerenmischung 0,5 bis 50, vorzugsweise 1 bis 20 und insbesondere 1 bis 10 Gew.%.

Es versteht sich, daß auch Mischungen der vorstehend aufgeführten Kautschuktypen eingesetzt werden können.

Neben den wesentlichen Komponenten (A) bis (C) können die Formmassen übliche Zusatzstoffe und Verarbeitungshilfsmittel enthalten.

Ihr Anteil beträgt bis zu 20 Gew.%, vorzugsweise bis zu 10 Gew.%, bezogen auf das Gesamtgewicht der Komponenten (A) bis (C).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente sowie Weichmacher.

Oxidationsverzögerer und Wärmestabilisatoren, die den thermoplastischen Formmassen zugesetzt werden können, sind z.B. Halogenide von Metallen der Gruppe I des Periodischen Systems, z.B. Natrium-, Kalium-, und Lithium-halogenide, gegebenenfalls in Verbindung mit Kupfer-(I)-halogeniden, z.B. Kupferchloriden, -bromiden oder -iodiden. Ferner sind sterisch gehinderte Phenole, Hydrochinone, substituierte Vertreter dieser Gruppe und Mischungen derselben, vorzugsweise in Konzentrationen bis zu 1 Gew.%, bezogen auf das Gewicht der Komponenten (A) bis (C), einsetzbar.

Beispiele für UV-Stabilisatoren sind verschiedene substituierte Resorcine, Salicylate, Benzotriazole und Benzophenone, deren Anteil im allgemeinen nicht mehr als 2 Gew.%, bezogen auf das Gewicht der Komponenten (A) bis (C) beträgt.

Gleit- und Entformungsmittel, die in der Regel in Mengen bis zu 1 Gew.% den thermoplastischen Formmassen zugesetzt werden, sind Stearinsäuren, Stearylalkohol, Stearinsäurealkylester und Stearinsäureamide sowie Ester des Pentaerythrits mit langkettigen Fettsäuren.

Ein wesentliches Merkmal der Erfindung ist es, daß die Reaktion einstufig durchgeführt wird. Wesentlich ist ferner die Reihenfolge, in der die Aufbaukomponenten (A) bis (C) zusammengebracht werden, wobei, wie bereits ausgeführt wurde, insbesondere gewährleistet sein muß, daß die Schmelze aus (A) und (B) vor der Zugabe von (C) nicht erstarrt oder sich nicht auf irgend eine andere Weise verfestigt, so daß diese entsprechend dem Stande der Technik erneut aufgeschmolzen werden müßte.

Erfindungsgemäß mischt man die Fasern (B), vorzugsweise Glasfasern, zunächst mit einem oder mehreren der thermoplastischen Kunststoffe (A) oberhalb dessen Schmelzpunkts, zweckmäßigerweise bei einer Temperatur im Bereich von 250 bis 300°C. Die Temperatur richtet sich im wesentlichen nach dem Schmelzpunkt des jeweils verwendeten thermoplastischen Kunststoffs oder deren Mischungen. Geeignete Mischvorrichtungen sind beispielsweise Einfach- oder Mehrfach-Schneckenextruder, wie sie in der Kunststofftechnik gebräuchlich sind. In die erhaltene homogene Schmelze aus (A) und (B) wird in der gleichen Mischvorrichtung direkt der Kautschuk (C) eingebracht. Die so erhaltene Schmelze wird danach extrudiert und granuliert.

Die nach dem erfindungsgemäßen Verfahren hergestellten Formmassen besitzen eine verbesserte Zugfestigkeit bei praktisch unveränderten anderen mechanischen Eigenschaften.

Die verstärkten, zähmodifizierten thermoplastischen Formmassen finden insbesondere Verwendung zur Herstellung von Formkörpern.

### Beispiele

Zur Herstellung der thermoplastischen Formmassen wurden folgende Ausgangsstoffe eingesetzt.

Komponente A: Polyhexamethylenadipinsäureamid mit einer relativen Viskosität, gemessen in 1 gew.%iger Lösung in konzentrierter Schwefelsäure (96 gew.%ig), von 2,7.

Komponente B: Endlosstränge aus E-Glasfasern mit einer Aminosilan-Oberflächenbehandlung (Silenka® 095).

Komponente C: Ethylen-Propylenkautschuk (Ethylen/Propylen-Gewichtsverhältnis 45:55) gepfropft mit 1 Gew.% Maleinsäureanhydrid; MFI 150 g/10 Min. bei 230°C und 21,6 kg Belastung.

### Vergleichsbeispiel I

Zur Herstellung der Formmasse wurden 70 Gew.-Teile der Komponente (A) in einem Extruder vom Typ ZSK 53 der Firma Werner und Pfleiderer, Stuttgart, bei 280°C aufgeschmolzen und in die Schmelze 30 Gew.-Teile der Komponente (B) eingebracht. Nach einer mittleren Verweilzeit von 100 Sek. wurde die homogene Schmelze extrudiert und granuliert. An aus diesem Granulat hergestellten Formkörpern wurden die in der folgenden Tabelle genannten mechanischen Eigenschaften gemessen.

### Vergleichsbeispiel II

86 Gew.-Teile einer mit 35 Gew.%, bezogen auf das Gesamtgewicht, der Komponente (B) verstärkten Komponenten (A) wurden mit 10 Gew.-Teilen der Komponenten (C) und 4 Gew.-Teilen der Komponente (A) bei Raumtemperatur vermischt, die Mischung wurde in den vorgenannten Extruder eingebracht, bei 280°C aufgeschmolzen, homogenisiert, die homogene Schmelze nach einer mittleren Verweilzeit von 100 Sek. extrudiert und granuliert. Aus dem erhaltenen Granulat wurden Prüfkörper gespritzt, an denen die in der folgenden Tabelle genannten mechanischen Eigenschaften gemessen wurden.

### Vergleichsbeispiel III

60 Gew.-Teile der Komponente (A) und 10 Gew.-Teile der Komponente (C) wurden bei Raumtemperatur gemischt, die Mischung wurde in den vorgenannten Extruder eingebracht, bei 280°C aufgeschmolzen und der Schmelze 30 Gew.-Teile der Komponente (B) einverleibt. Nach einer mittleren Verweilzeit von 100 Sek. wurde die homogene Schmelze extrudiert und granuliert. Aus dem erhaltenen Granulat wurden Prüfkörper gespritzt, an denen die in der folgenden Tabelle genannten mechanischen Eigenschaften gemessen wurden.

### Beispiel

60 Gew.-Teile der Komponente (A) wurden in den vorgenannten Extruder eingeführt und bei einer Temperatur von 280°C aufgeschmolzen. In die erhaltene Schmelze wurden bei der gleichen Temperatur 30 Gew.-Teile der Komponente (B) eingebracht und homogen verteilt und anschließend bei konstanter Temperatur 10 Gew.-Teile der Komponente (C) zugeführt. Nach einer Gesamtverweilzeit von 100 Sek. wurde die homogene Schmelze extrudiert und granuliert. Aus dem erhaltenen Granulat wurden Prüfkörper gespritzt, an denen die in der folgenden Tabelle genannten mechanischen Eigenschaften gemessen wurden.

**Tabelle**

| Mechanische Eigenschaften von Prüfkörpern, hergestellt nach Angaben der Vergleichsbeispiele I bis III und nach dem Beispiel | | | |
|---|---|---|---|
| Prüfkörper, hergestellt nach | mechanische Eigenschaften | | |
| | E-Modul nach DIN 53457 [MPa] | Zugfestigkeit nach DIN 53457 [MPa] | Schlagzähigkeit nach DIN 53453 [kJ/m] |
| Vergleichsbeispiel I | 9705 | 170 | 30 |
| Vergleichsbeispiel II | 7110 | 129 | 60 |
| Vergleichsbeispiel III | 9030 | 133 | 42 |
| | | | |
| Beispiel | 8950 | 152 | 59 |

## Patentansprüche

1. Verfahren zur Herstellung von verstärkten, zähmodifizierten thermoplastischen Formmassen, bestehend aus, bezogen auf 100 Gew.-Teile,
A) 30 bis 93 Gew.-Teile mindestens eines thermoplastischen Polyamids,
B) 5 bis 50 Gew.-Teile Fasern,
C) 2 bis 20 Gew.-Teile mindestens eines schlagzäh modifizierenden Kautschuks, welcher 0,5 bis 60 Gew.-% an Gruppen enthält, die sich von säurefunktionellen oder latent säurefunktionellen Gruppen ableiten, und
bis zu 20 Gew.-% üblicher Zusatzstoffe und Verarbeitungsmittel (bezogen auf das Gesamtgewicht der Komponenten (A) bis (C),
wobei man
in die Schmelze des thermoplastischen Polyamids (A) zunächst die Fasern (B) einbringt,
die Komponenten (A) und (B) vermischt,
danach der erhaltenen Mischung in der Schmelze den Kautschuk (C) einverleibt und
die erhaltene Formmasse extrudiert und granuliert, dadurch gekennzeichnet, daß man die Reaktion einstufig durchführt, wobei die Schmelze aus (A) und (B) vor der Zugabe von (C) nicht erstarrt oder sich anderweitig verfestigt.

2. Verfahren nach Anspruch 1, dadurch gekennzeichnet, daß die verstärkten, zähmodifizierten thermoplastischen Formmassen, bestehen, bezogen auf 100 Gew.-Teile, aus
A) 30 bis 93 Gew.-Teile mindestens eines thermoplastischen Polyamids,
B) 5 bis 50 Gew.-Teile Fasern und
C) 2 bis 20 Gew.-Teile mindestens eines schlagzäh modifizierenden Kautschuks, welcher 0,5 bis 60 Gew.-% an Gruppen enthält, die sich von säurefunktionellen oder latent säurefunktionellen Gruppen ableiten.

3. Verfahren nach einem der Ansprüche 1 oder 2, dadurch gekennzeichnet, daß man die Reaktion einstufig bei einer Temperatur im Bereich von 250 bis 300°C durchführt.

4. Verfahren nach einem der Ansprüche 1 oder 2, dadurch gekennzeichnet, daß man in die Schmelze der thermoplastischen Kunststoffe (A) zunächst die Fasern (B) und danach die Kautschuke (C) einbringt und die Reaktion bei einer konstanten Temperatur im Bereich von 250 bis 300°C durchführt.

5. Verfahren nach einem der Ansprüche 1 bis 4, dadurch gekennzeichnet, daß man als Fasern (B) Glasfasern verwendet.

## Claims

1. A process for the preparation of a reinforced, impact-modified thermoplastic molding composition comprising, based on 100 parts by weight,
A) from 30 to 93 parts by weight of one or more thermoplastic polyamides,
B) from 5 to 50 parts by weight of fibers,
C) from 2 to 20 parts by weight of one or more impact-modifying rubbers containing from 0.5 to 60% by weight of groups derived from acid-functional or latently acid-functional groups, and
up to 20% by weight of customary additives and processing agents (based on the total weight of components (A) to (C)),
in which
the fibers (B) are first introduced into the melt of the thermoplastic polyamide (A),
components (A) and (B) are mixed,
the rubber (C) is then introduced into the resultant mixture in the melt, and
the resultant molding composition is extruded and granulated, wherein the reaction is carried out in one step during which the melt consisting of (A) and (B) does not set or become solid in another manner before the addition of (C).

2. A process as claimed in claim 1, wherein the reinforced, impact-modified thermoplastic molding composition comprises, based on 100 parts by weight,
A) from 30 to 93 parts by weight of one or more thermoplastic polyamides,
B) from 5 to 50 parts by weight of fibers, and
C) from 2 to 20 parts by weight of one or more impact-modifying rubbers containing from 0.5 to 60% by weight of groups derived from acid-functional or latently acid-functional groups.

3. A process as claimed in claim 1 or 2, wherein the reaction is carried out in one step at from 250 to 300°C.

4. The process as claimed in claim 1 or 2, wherein first the fibers (B) and then the rubber (C) are introduced into the melt of the thermoplastic (A), and the reaction is carried out at a constant temperature in the range from 250 to 300°C.

5. A process as claimed in any of claims 1 to 4, wherein the fibers (B) used are glass fibers.

## Revendications

1. Procédé pour fabriquer des mélanges à mouler thermoplastiques, renforcés, résistant au choc, constitués, par rapport à 100 parties en poids,
A) de 30 à 93 parties en poids d'au moins un polyamide thermoplastique,
B) de 5 à 50 parties en poids de fibres,
C) de 2 à 20 parties en poids d'au moins un caoutchouc modifiant la résistance au choc, qui contient de 0,5 à 60 % en poids de groupes qui dérivent de groupes à fonctionnalité acide ou à fonctionnalité acide latente, et
d'une quantité allant jusqu'à 20 % en poids d'additifs et d'auxiliaires de mise en oeuvre usuels (par rapport au poids total des constituants (A) à (C)),
dans lequel on introduit d'abord les fibres (B) dans la masse fondue du polyamide thermoplastique (A),
on mélange les constituants (A) et (B),
puis on incorpore le caoutchouc (C) dans le mélange obtenu à l'état fondu, et
on extrude et on granule le mélange à mouler obtenu,
caractérisé en ce qu'on met en oeuvre la réaction en une étape, la masse fondue (A) et (B) n'étant pas solidifiée avant addition de (C), ou n'étant pas autrement durcie.

2. Procédé selon la revendication 1, caractérisé en ce que les mélanges à mouler thermoplastiques résistant au choc sont constitués, pour 100 parties en poids,
A) de 30 à 93 parties en poids d'au moins un polyamide thermoplastique,
B) de 5 à 50 parties en poids de fibres,
C) de 2 à 20 parties en poids d'au moins un caoutchouc modifiant la résistance au choc, qui contient de 0,5 à 60 % en poids de groupes qui dérivent de groupes à fonctionnalité acide ou à fonctionnalité acide latente.

3. Procédé selon l'une des revendications 1 ou 2, caractérisé en ce qu'on met en oeuvre la réaction en une étape à une température comprise dans l'intervalle de 250 à 300°C.

4. Procédé selon l'une des revendications 1 ou 2, caractérisé en ce qu'on introduit dans la masse fondue des matériaux thermoplastiques (A), d'abord les fibres (B), puis les caoutchoucs (C), la réaction étant mise en oeuvre à une température constante comprise dans l'intervalle de 250 à 300°C.

5. Procédé selon l'une des revendications 1 à 4, caractérisé en ce qu'on utilise comme fibres (B) des fibres de verre.
